(19) Europäisches Patentamt
European Patent Office
Office européen des brevets

(11) **EP 3 141 461 A1**

(12) **EUROPEAN PATENT APPLICATION**

(43) Date of publication:
**15.03.2017 Bulletin 2017/11**

(51) Int Cl.:
***B62D 15/02*** *(2006.01)*     ***B60W 30/09*** *(2012.01)*

(21) Application number: **16181842.2**

(22) Date of filing: **29.07.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.07.2015 JP 2015151425**

(71) Applicant: **Toyota Jidosha Kabushiki Kaisha
Toyota-shi, Aichi 471-8571 (JP)**

(72) Inventors:
• OKUDA, Yuji
  **Toyota-shi,, Aichi 471-8571 (JP)**
• KINUGASA, Hidenobu
  **Toyota-shi,, Aichi 471-8571 (JP)**
• MURATA, Hiroki
  **Toyota-shi,, Aichi 471-8571 (JP)**

(74) Representative: **TBK
Bavariaring 4-6
80336 München (DE)**

(54) **DRIVING SUPPORT DEVICE**

(57)     A driving support device includes: an obstacle detection unit (14) configured to detect an obstacle present in front of a host vehicle; a collision avoidance support control unit (11) configured to calculate a first target steering control amount for collision avoidance when the host vehicle is likely to collide with the obstacle; a lane detection unit (14) configured to detect a lane in which the host vehicle travels; a lane departure avoidance support control unit (12) configured to calculate a second target steering control amount for maintaining the traveling of the host vehicle along the lane based on a departure amount representing a degree to which the host vehicle departs from the lane; and an arbitration control unit (13) configured to decide a steering control amount for a steered wheel based on the first target steering control amount and the second target steering control amount such that the first target steering control amount contributes higher to determine the steering control amount for the steered wheel than the second target steering control amount and control the steered wheel based on the steering control amount decided by the arbitration control unit.

FIG. 7

## Description

BACKGROUND OF THE INVENTION

1. Field of the Invention

The invention relates to a driving support device that has a function for supporting driving by a driver so that a collision of a vehicle with an obstacle is avoided and a function for supporting the driving by the driver so that the vehicle travels in a lane.

2. Description of Related Art

A driving support device for a vehicle that carries out a collision avoidance support control is known. The collision avoidance support control is a control for decelerating a host vehicle by the use of an automatic brake in a case where a camera sensor, a radar sensor, or the like detects an obstacle which is highly likely to collide with the host vehicle. In addition, as disclosed in document JP 2012-116403 A and the like, a driving support device for a vehicle is also known that carries out a collision avoidance support control in which the host vehicle is automatically steered to be separated from the obstacle by an electric power steering device as well as the automatic brake being put into operation.

Furthermore, as disclosed in document JP 2014-142965 A, a driving support device for a vehicle that carries out a lane departure avoidance support control is known, too. The lane departure avoidance support control is a control in which, for example, white lines on the right and left of a road are detected by the camera sensor, a target traveling line (such as a center line between the right and left white lines) in a traveling lane is set based on the right and left white lines, and the driver's steering operation is supported by a steering auxiliary torque being given to a steering mechanism so that a traveling position of the host vehicle is maintained in the vicinity of the target traveling line. Also known is another type of lane departure avoidance support control in which a buzzer is sounded and the steering auxiliary torque is given to the steering mechanism so that the host vehicle returns into the traveling lane when the host vehicle is likely to depart outwards from the traveling lane (right and left white lines).

The following problem arises in a case where the driving support device has both the automatic steering-based collision avoidance support control function and the lane departure avoidance support control function. In a case where the automatic steering-based collision avoidance support control is initiated during the lane departure avoidance support control, for example, a target steering amount calculated for collision avoidance might have a lane departure direction (direction away from the target traveling line or direction of outward departure from the traveling lane). In this case, the lane departure avoidance support control might come into play and the collision avoidance may have a reduced effect.

SUMMARY OF THE INVENTION

It is an object of the present invention to provide a driving support device and method with which an appropriate collision avoidance support control effect can be achieved.

In order to achieve such an object, there is provided a driving support device as defined in claim 1. Further, there is provided a driving support method as defined in claim 5. Further aspects and features of the present invention are defined in the dependent claims.

A first aspect of the invention is a driving support device including: an obstacle detection unit configured to detect an obstacle present in front of a host vehicle; a collision avoidance support control unit configured to calculate a first target steering control amount for collision avoidance when the host vehicle is likely to collide with the obstacle; a lane detection unit configured to detect a lane in which the host vehicle travels; a lane departure avoidance support control unit configured to calculate a second target steering control amount for maintaining the traveling of the host vehicle along the lane based on a departure amount representing a degree to which the host vehicle departs from the lane; and an arbitration control unit configured to decide a steering control amount for a steered wheel based on the first target steering control amount and the second target steering control amount such that the first target steering control amount contributes higher to determine the steering control amount for the steered wheel than the second target steering control amount and control the steered wheel based on the steering control amount decided by the arbitration control unit.

A steering angle, a steering torque, or the like may be used as the steering control amount.

According to the first aspect described above, a steering control by the collision avoidance support system takes precedence in a case where the collision avoidance support system and the lane departure avoidance support system are provided and the steering control required by the collision avoidance support system and a steering control required by the lane departure avoidance support system interfere with each other. Accordingly, an appropriate collision avoidance support is given to a driver.

In the first aspect described above, the arbitration control unit may be configured to decide the steering control amount for the steered wheel without the second target steering control amount when the first target steering control amount is calculated.

In the first aspect described above, the first target steering control amount may include a first steering direction, the second target steering control amount may include a second steering direction, and the arbitration control unit may be configured to decide the steering control amount for the steered wheel without the second target steering control amount when the first steering direction differs from the second steering direction.

According to the above-described aspect, the driver is given both the collision avoidance support and a lane departure avoidance support in a state where the collision avoidance support takes precedence.

In the first aspect described above, the first target steering control amount may include a first steering direction, the second target steering control amount may include a second steering direction, and the arbitration control unit may be configured to determine whether or not the first target steering control amount exceeds the second target steering control amount when the first steering direction is the same as the second steering direction, and decide the steering control amount for the steered wheel without the second target steering control amount when the first target steering control amount exceeds the second target steering control amount..

According to the above-described aspect, the driver is given both the collision avoidance support and the lane departure avoidance support in an even more appropriate manner.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a schematic system configuration diagram of a driving support device according to this embodiment;
FIG. 2 is an explanatory drawing showing a candidate of an avoidance trajectory of a host vehicle;
FIG. 3 is a plan view showing right and left white lines LR, LL, a target traveling line Ld, and a curve radius R;
FIG. 4 is a plan view showing the target traveling line Ld, a center distance Dc, and a yaw angle $\theta y$ in a case where a lane keeping support control is carried out;
FIG. 5 is a plan view showing the left white line LL (LR), a side distance Ds, and the yaw angle $\theta y$ in a case where a lane departure suppression control is carried out;
FIG. 6 is a graph showing a target steering angle conversion map;
FIG. 7 is a flowchart showing an arbitration control routine; and
FIG. 8 is a flowchart showing an arbitration control routine according to a modification example.

DETAILED DESCRIPTION OF EMBODIMENTS

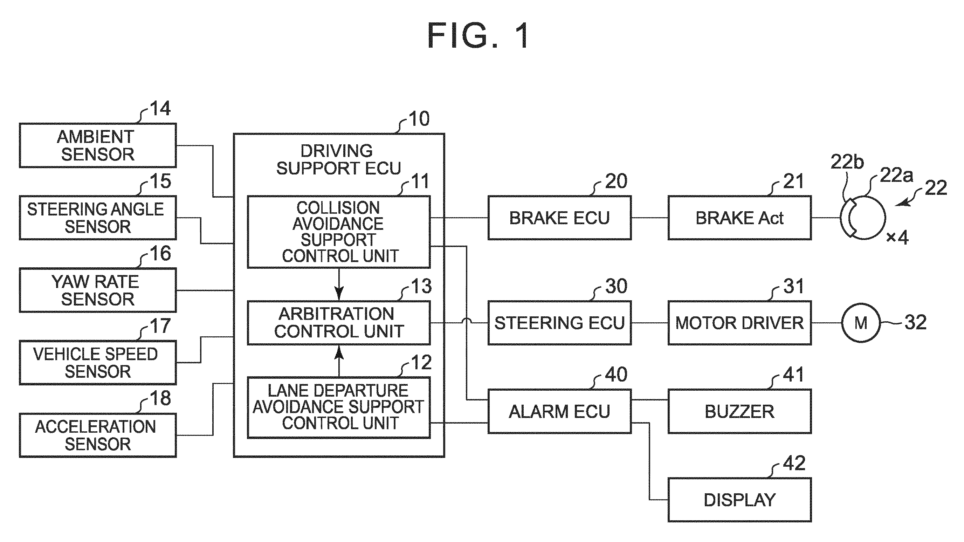

Hereinafter, an embodiment of the invention will be described in detail with reference to accompanying drawings. FIG. 1 is a schematic system configuration diagram of a driving support device according to this embodiment.

The driving support device is provided with a driving support ECU 10, a brake ECU 20, a steering ECU 30, and an alarm ECU 40. Each of the ECUs 10, 20, 30, 40 is provided with a microcomputer as a main portion. The ECUs 10, 20, 30, 40 are connected to each other to be capable of transmission and reception to and from each other via a controller area network (CAN, not illustrated). The ECU is an abbreviation of electronic control unit. In this specification, the microcomputer includes a CPU and a storage device such as a ROM and a RAM, and the CPU realizes various functions by executing instructions (programs) stored in the ROM. In this specification, a vehicle in which this driving support device is mounted will be referred to as a "host vehicle".

The driving support ECU 10 is connected to an ambient sensor 14, a steering angle sensor 15, a yaw rate sensor 16, a vehicle speed sensor 17, and an acceleration sensor 18. The ambient sensor 14 has a function for acquiring information relating to at least a road in front of the host vehicle and a three-dimensional object that is present on the road. Examples of the three-dimensional object include a moving object such as a pedestrian, a bicycle, and an automobile and a fixed object such as a utility pole, a tree, and a guardrail.

The ambient sensor 14 is provided with, for example, a radar sensor and a camera sensor. The radar sensor irradiates the vicinity (including at least in front) of the host vehicle with, for example, a millimeter-waveband radio wave. In a case where the three-dimensional object is present, the radar sensor receives a reflected wave from the three-dimensional object and calculates the presence or absence of the three-dimensional object and a relative relationship between the host vehicle and the three-dimensional object (such as a distance between the host vehicle and the three-dimensional object and relative speeds of the host vehicle and the three-dimensional object) based on the timing of the radio wave irradiation and the timing of the radio wave reception. The camera sensor is provided with a stereo camera or the like. The camera sensor images landscapes on the right and left in front of the vehicle and calculates the shape of the road, the presence or absence of the three-dimensional object, the relative relationship between the host vehicle and the three-dimensional object, and the like based on the imaged data on the right and left. In addition, the camera sensor recognizes a lane marker such as right and left white lines on the road (hereinafter, referred to as white lines) and calculates the shape of the road and a positional relationship between the road and the host vehicle.

The information acquired by the ambient sensor 14 will be referred to as target object information. The ambient sensor 14 repeatedly transmits the target object information to the driving support ECU 10 at a predetermined cycle. The ambient sensor 14 does not necessarily have to be provided with the radar sensor and the camera sensor. For example, the ambient sensor 14 may have only the camera sensor. In addition, navigation system information can also be used with regard to the information showing the shape of the road on which the host vehicle travels and the positional relationship between the road and the host vehicle.

The steering angle sensor 15 detects a steering angle of the host vehicle and transmits the detection signal to the driving support ECU 10. The yaw rate sensor 16 detects a yaw rate acting on the host vehicle and transmits the detection signal to the driving support ECU 10. The vehicle speed sensor 17 detects a traveling speed of the host vehicle (hereinafter, referred to as a vehicle speed) and transmits the detection signal to the driving support ECU 10. The acceleration sensor 18 detects a longitudinal acceleration that is an acceleration acting in a longitudinal direction of the host vehicle and a lateral acceleration that is an acceleration acting in a horizontal direction of the host vehicle (vehicle width direction) and transmits the detection signals to the driving support ECU 10. The vehicle speed sensor 17 may be configured to transmit a signal of a vehicle wheel speed sensor instead of the vehicle speed sensor 17 to the driving support ECU 10 so that the vehicle speed is calculated based on a count value obtained by a pulse signal of the vehicle wheel speed sensor disposed in each vehicle wheel of the host vehicle being counted.

The driving support ECU 10 is provided with a collision avoidance support control unit 11, a lane departure avoidance support control unit 12, and an arbitration control unit 13. In this embodiment, the collision avoidance support control unit 11, the lane departure avoidance support control unit 12, and the arbitration control unit 13 are disposed in the single driving support ECU 10. However, the collision avoidance support control unit 11, the lane departure avoidance support control unit 12, and the arbitration control unit 13 may also be configured to be disposed in independent ECUs. Functions of the respective control units 11, 12, 13 of the driving support ECU 10 will be described later.

The brake ECU 20 is connected to a brake actuator 21. The brake actuator 21 is disposed in a hydraulic circuit between a master cylinder (not illustrated) that pressurizes hydraulic oil with a brake pedal effort and friction brake mechanisms 22 that are disposed in the right, left, front, and rear wheels. The friction brake mechanism 22 is provided with a brake disc 22a that is fixed to the vehicle wheel and a brake caliper 22b that is fixed to a vehicle body. The friction brake mechanism 22 generates a hydraulic braking force by operating a wheel cylinder built into the brake caliper 22b with the hydraulic pressure of the hydraulic oil supplied from the brake actuator 21 and pressing a brake pad against the brake disc 22a.

The brake actuator 21 is a known actuator that adjusts the hydraulic pressure which is supplied to the wheel cylinder built into the brake caliper 22b. The brake actuator 21 generates the braking force in the right, left, front, and rear wheels by supplying the wheel cylinder with the hydraulic pressure depending on a control command from the brake ECU 20.

The steering ECU 30 is a control device for an electric power steering system. The steering ECU 30 is connected to a motor driver 31. The motor driver 31 is connected to a steering motor 32. The steering motor 32 is incorporated into a steering mechanism (not illustrated) and steers right and left steered wheels with rotation of a rotor by electric power supplied from the motor driver 31. Usually, the steering ECU 30 detects a driver's steering torque and generates an assist torque depending on the steering torque in the steering motor 32. In a case where a steering command that is transmitted from the driving support ECU 10 when no steering wheel operation is performed by the driver is received, however, the steering ECU 30 steers the steered wheels by controlling the driving of the steering motor 32 in accordance with the steering command.

The alarm ECU 40 is connected to a buzzer 41 and a display 42. The alarm ECU 40 calls the driver's attention by sounding the buzzer 41 in accordance with a command from the driving support ECU 10 and displays a driving support control operation situation by using the display 42.

Hereinafter, the driving support ECU 10 will be described. The driving support device according to this embodiment is provided with a collision avoidance support system and a lane departure avoidance support system. The collision avoidance support control unit 11 of the driving support ECU 10 is a main portion that controls an operation of the collision avoidance support system. The lane departure avoidance support control unit 12 of the driving support ECU 10 is a main portion that controls an operation of the lane departure avoidance support system.

The collision avoidance support control unit 11 that is disposed in the driving support ECU 10, the above-described sensors 14, 15, 16, 17, 18, the brake ECU 20 (including the brake actuator 21 and the friction brake mechanism 22), the steering ECU 30 (including the motor driver 31 and the steering motor 32), and the alarm ECU 40 (including the buzzer 41 and the display 42) constitute the collision avoidance support system. The lane departure avoidance support control unit 12 that is disposed in the driving support ECU 10, the above-described sensors 14, 15, 16, 17, 18, the steering ECU 30 (including the motor driver 31 and the steering motor 32), and the alarm ECU 40 (including the buzzer 41 and the display 42) constitute the lane departure avoidance support system.

The collision avoidance support control unit 11, which is the backbone of the collision avoidance support system, will be described first.

The collision avoidance support control unit 11 generates information relating to the road on which the host vehicle has traveled at a predetermined calculation cycle based on the target object information transmitted from the ambient sensor 14. For example, the collision avoidance support control unit 11 generates coordinate information (positional information) of a ground surface, the three-dimensional object, and the white line by using a front end center position of the host vehicle as a starting point and by using a coordinate system which spreads in the horizontal direction and forward from the starting point. In this manner, the collision avoidance support control unit 11 grasps the shape of a traveling lane of the host vehicle that is partitioned by the right and left white lines, the position and orientation of the host vehicle in the traveling lane, and relative positions of the ground surface and the three-dimensional object with respect to the host vehicle.

The collision avoidance support control unit 11 calculates a turning radius of the host vehicle based on the yaw rate detected by the yaw rate sensor 16 and the vehicle speed detected by the vehicle speed sensor 17 and calculates a trajectory of the host vehicle based on the turning radius. The collision avoidance support control unit 11 determines, based on the position of the three-dimensional object and the trajectory of the host vehicle, whether or not the host vehicle collides with the three-dimensional object in a case where the host vehicle travels while maintaining the current traveling state. In a case where the three-dimensional object is the moving object, the collision avoidance support control unit 11 calculates a trajectory of the three-dimensional object and determines the presence or absence of the collision based on the trajectory of the three-dimensional object and the trajectory of the host vehicle.

In a case where it is determined based on the determination result that the host vehicle collides with the three-dimensional object, the collision avoidance support control unit 11 recognizes the three-dimensional object as an obstacle. The collision avoidance support control unit 11 calculates a collision prediction time TTC, which is a predicted period of time until the collision between the host vehicle and the obstacle (time to collision), by the following Equation (1) based on a distance L between the obstacle and the host vehicle and a relative speed Vr between the host vehicle and the obstacle.

$$TTC=L/Vr\ldots(1)$$

In a case where the collision prediction time TTC is equal to or shorter than a collision determination threshold TTC0 set in advance, the collision avoidance support control unit 11 determines that the host vehicle is highly likely to collide with the obstacle.

In a case where it is determined that the host vehicle is highly likely to collide with the obstacle, the collision avoidance support control unit 11 calculates a target deceleration for host vehicle deceleration. In a case where the obstacle is stationary, for example, a traveling distance X until the host vehicle stops can be represented by the following Equation (2), in which V is the speed (=relative speed) of the host vehicle at the present point in time, a is the deceleration of the host vehicle, and t is the length of time until the stopping of the vehicle.

$$X=V\cdot t+(1/2)\cdot a\cdot t^2\ldots(2)$$

In addition, the time t until the stopping of the vehicle can be represented by the following Equation (3).

$$t=-V/a\ldots(3)$$

Accordingly, when Equation (2) is substituted with Equation (3), the deceleration a that is required for the host vehicle to be stopped at a traveling distance of D can be represented by the following Equation (4).

$$a=-V^2/2D\ldots(4)$$

In order for the vehicle to be stopped a distance of β in front of the obstacle, this traveling distance D may be set to a distance (L-β) obtained by subtracting the distance β from the distance L detected by the ambient sensor 14. In a case where the obstacle travels, the relative speed and relative deceleration with respect to the obstacle may be used during the calculation.

The collision avoidance support control unit 11 sets the deceleration a calculated as described above to the target deceleration. In this case, the deceleration that can be generated in the vehicle has a limit (for example, approximately -1G). Accordingly, in a case where the absolute value of the calculated target deceleration exceeds an upper limit value, the target deceleration is set to the upper limit value set in advance. The collision avoidance support control unit 11 transmits a braking command for collision avoidance that represents the target deceleration to the brake ECU 20. Then, the brake ECU 20 controls the brake actuator 21 and generates a friction braking force in the vehicle wheel in accordance with the target deceleration. Then, an automatic brake is put into operation and the host vehicle is decelerated. The collision avoidance support control unit 11 calls the driver's attention by transmitting an attention-calling command to the alarm ECU 40 in a stage preceding the operation of the automatic brake.

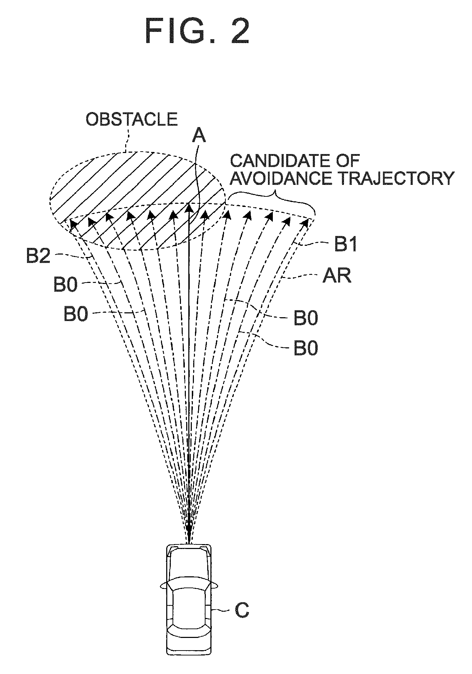

The collision avoidance support control unit 11 calculates an avoidance target trajectory, which can be adopted for the host vehicle to avoid the collision with the obstacle, while calculating the target deceleration. For example, the collision avoidance support control unit 11 specifies a path A through which a host vehicle C can pass in a case where the host vehicle C is assumed to travel while maintaining the current traveling state as illustrated in FIG. 2. Then, the collision avoidance support control unit 11 specifies a path B1 through which the host vehicle C is predicted to pass in a case where a maximum amount of change $\Delta$Gy in lateral force for a safe turning of the host vehicle C at the current speed of the host vehicle C is added to a current lateral acceleration Gy0 of the host vehicle C and specifies a path B2 through which the host vehicle C is predicted to pass in the opposite case where the maximum amount of change $\Delta$Gy is subtracted from the current lateral acceleration Gy0 of the host vehicle C. The collision avoidance support control unit 11 obtains, as a candidate of an avoidance trajectory, a path B0 pertaining to a case where the lateral acceleration is changed a predetermined amount by a predetermined amount within a range AR (traveling range) of the path B1 to the path B2. The collision avoidance support control unit 11 specifies, as the avoidance trajectory, a trajectory in which the host vehicle C can avoid the collision without interfering with the obstacle by turning based on a degree of interference between the avoidance trajectory candidate and the obstacle. The avoidance trajectory is a range in which the host vehicle C does not depart from the traveling lane, and it is preferable that the avoidance trajectory is limited to a range in which ground surface formation is confirmed.

In a case where it is determined that the host vehicle collides with the obstacle despite the operation of the above-described automatic brake, the collision avoidance support control unit 11 calculates a target yaw rate for causing the host vehicle to travel along the avoidance trajectory specified as described above. The collision avoidance support control unit 11 calculates a target steering angle $\theta1^*$ at which the target yaw rate is obtained based on the target yaw rate and the vehicle speed of the host vehicle and transmits a steering command for collision avoidance that represents this target steering angle $\theta1^*$ to the steering ECU 30 via the arbitration control unit 13.

The function of the arbitration control unit 13 will be described later. Herein, a case where the steering command is transmitted to the steering ECU 30 via the arbitration control unit 13 will be described. Upon receiving the steering command via the arbitration control unit 13 from the collision avoidance support control unit 11, the steering ECU 30 drives the steering motor 32 and steers the steered wheel in accordance with the target steering angle $\theta1^*$, that is, such that the steering angle is in compliance with the target steering angle $\theta1^*$. Then, automatic steering comes into play and the host vehicle travels along the avoidance trajectory while being decelerated. The steering angle and the steering torque have a correlation, and thus a target steering torque may be used instead of the target steering angle as a target control amount that is transmitted to the steering ECU 30.

As described above, the collision of the host vehicle with the obstacle is avoided by the automatic brake or the automatic brake and the automatic steering.

Hereinafter, the lane departure avoidance support control unit 12, which is the backbone of the lane departure avoidance support system, will be described. The lane departure avoidance support control unit 12 is provided with a lane keeping support function and a lane departure suppression function as its functions. The lane keeping support function is a function for supporting the driver's steering operation by giving the steering mechanism a steering auxiliary torque so that a traveling position of the host vehicle is maintained in the vicinity of a target traveling line. The lane departure suppression function is a function for calling the driver's attention with the buzzer 41 and the display 42 and preventing the host vehicle from departing from the traveling lane by giving the steering mechanism a steering auxiliary torque when the host vehicle is likely to depart from the traveling lane (right and left white lines). These steering auxiliary torques differ from a steering assist torque that the electric power steering system generates in accordance with a steering wheel operation force during the driver's steering operation and represent torques which are given to the steering mechanism by a command from the driving support ECU 10 regardless of the driver's steering wheel operation.

A control for allowing the lane keeping support function to come into play will be referred to as a lane keeping support control, and a control for allowing the lane departure suppression function to come into play will be referred to as a lane departure suppression control. The lane keeping support control and the lane departure suppression control will be collectively referred to as a lane departure avoidance support control. In this embodiment, the lane departure avoidance support control unit 12 carries out the lane keeping support control and the lane departure suppression control. However, the lane departure avoidance support control unit 12 does not necessarily have to carry out both the lane keeping support control and the lane departure suppression control. The lane departure avoidance support control unit 12 may be configured to carry out only one of the lane keeping support control and the lane departure suppression control.

The lane departure avoidance support control unit 12 is configured to be capable of switching, by using an operation switch (not illustrated), between a mode in which the lane keeping support control and the lane departure suppression control are carried out (hereinafter, referred to as a first mode) and a mode in which only the lane departure suppression control is carried out without the lane keeping support control being carried out (hereinafter, referred to as a second mode).

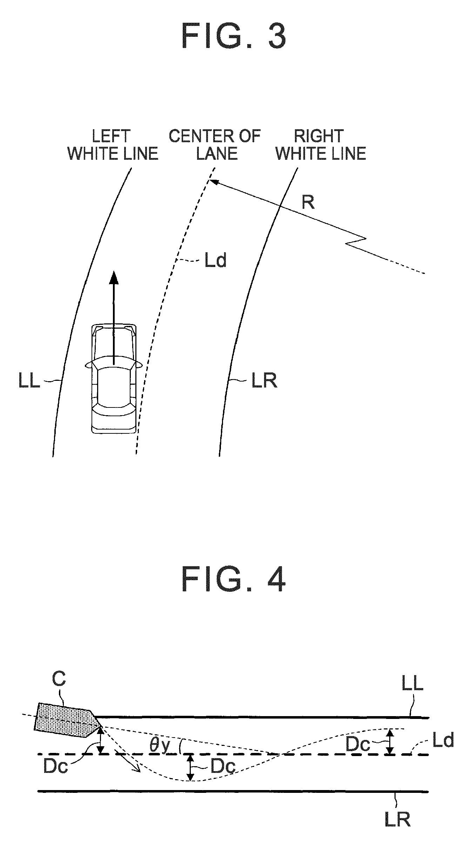

The lane departure avoidance support control unit 12 recognizes the right and left white lines based on the target object information transmitted from the ambient sensor 14 and determines the target traveling line for the traveling of the host vehicle based on the right and left white lines. As illustrated in FIG. 3, for example, the lane departure avoidance support control unit 12 detects a left white line LL and a right white line LR and determines the center of the lane, which is a center position of the right and left white lines, as a target traveling line Ld. In addition, the lane departure avoidance support control unit 12 calculates a curve radius R of the target traveling line Ld and the position and orientation of the host vehicle in the traveling lane partitioned by the left white line LL and the right white line LR.

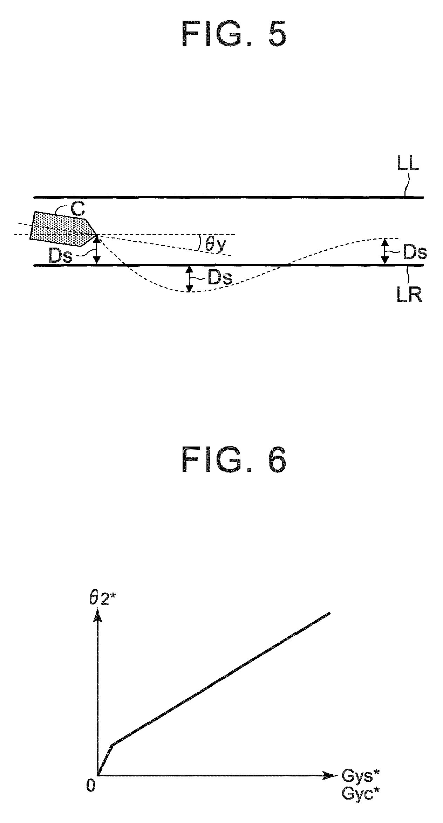

In a case where the lane keeping support control is carried out, the lane departure avoidance support control unit 12 calculates a distance Dc between the front end center position of the host vehicle C and the target traveling line Ld in a road width direction (hereinafter, referred to as a center distance Dc) and a deviation angle $\theta y$ between the direction of the target traveling line Ld and a traveling direction of the host vehicle C (hereinafter, referred to as a yaw angle $\theta y$) as illustrated in FIG. 4. In addition, in a case where the lane departure suppression control is carried out, the lane departure avoidance support control unit 12 calculates a distance Ds between the front end center position of the host vehicle C and the left white line LL or the right white line LR (right white line in the illustrated example) in the road width direction (hereinafter, referred to as a side distance Ds) and the yaw angle $\theta y$ that is the deviation angle between the direction of the target traveling line Ld and the traveling direction of the host vehicle as illustrated in FIG. 5.

The shape of the target traveling line Ld can be calculated only in a situation in which the left white line LL and the right white line LR are detected. Accordingly, the lane departure avoidance support control unit 12 carries out the lane keeping support control and the lane departure suppression control in a case where the first mode is selected and in a case where the left white line LL and the right white line LR are detected and carries out the lane departure suppression control, with the detectable white line LL (LR) regarded as a target, in a case where only one of the white line LL and the right white line LR can be detected. In addition, the lane departure avoidance support control unit 12 carries out the lane departure suppression control with the left white line LL and the right white line LR regarded as targets in a case where the second mode is selected and in a case where the left white line LL and the right white line LR are detected and carries out the lane departure suppression control, with the detectible white line LL (LR) regarded as a target, in a case where only one of the white line LL and the right white line LR can be detected. The lane keeping support control and the lane departure suppression control are not carried out at the same time, and thus switching therebetween is made in accordance with a condition set in advance.

In a case where the lane keeping support control is carried out, the lane departure avoidance support control unit 12 calculates a target lateral acceleration Gyc* in accordance with the following Equation (5) based on the center distance Dc, the yaw angle $\theta y$, and a road curvature $v$ (=1/R).

$$Gyc^* = K1 \times Dc + K2 \times \theta y + K3 \times v \ldots (5)$$

Herein, each of K1, K2, and K3 is a control gain. The target lateral acceleration Gyc* is a lateral acceleration that is set such that the host vehicle can travel along the target traveling line Ld. The center distance Dc and the yaw angle $\theta y$ represent a degree to which the host vehicle departs from the lane.

The lane departure avoidance support control unit 12 calculates a target steering angle $\theta 2^*$ based on the target lateral acceleration Gyc* and with reference to a target steering angle conversion map illustrated in FIG. 6 and transmits a steering command for lane maintenance support that represents the target steering angle $\theta 2^*$ to the steering ECU 30 via the arbitration control unit 13. Herein, a case where the steering command is transmitted to the steering ECU 30 via the arbitration control unit 13 will be described. Upon receiving the steering command via the arbitration control unit 13 from the lane departure avoidance support control unit 12, the steering ECU 30 drives the steering motor 32 and steers the steered wheel in accordance with the target steering angle $\theta 2^*$, that is, such that the steering angle is in compliance with the target steering angle $\theta 2^*$. The lane departure avoidance support control unit 12 repeats the above-described calculation at a predetermined cycle. In a case where a target lateral acceleration Gy* exceeds a minimum value set in advance (minimum value setting a dead zone), the lane departure avoidance support control unit 12 transmits the steering command for lane maintenance support to the steering ECU 30 via the arbitration control unit 13. Then, the auxiliary torque is generated in the steering mechanism and the host vehicle travels along the target traveling line Ld.

In a case where the lane departure suppression control is carried out, the lane departure avoidance support control unit 12 detects the side distance Ds at a predetermined calculation cycle. In a case where the side distance Ds falls short of a departure determination threshold Dsref, the lane departure avoidance support control unit 12 calculates a target lateral acceleration Gys* in accordance with the following Equation (6).

$$Gys^* = K4 \times Ds' + K5 \times \theta y + K6 \times v \ldots (6)$$

Herein, each of K4, K5, and K6 is a control gain. The target lateral acceleration Gys* is a lateral acceleration that is set such that the host vehicle does not depart outwards from the white line. Ds', which is set in correlation with the side distance Ds, is set to a value that increases as the host vehicle is separated outwards from the white line in a case where the host vehicle is positioned outside the white line as a departure avoidance target and is set to a value that decreases as the host vehicle is positioned more and more inwards from the white line in a case where the host vehicle is positioned inside the white line as the departure avoidance target. With the side distance Ds pertaining to a case where the host vehicle is positioned outside the departure avoidance target white line being expressed as a negative value, for example, a value that is obtained by subtracting the side distance Ds from the departure determination threshold Dsref may be set to Ds' (Ds'=Dsref-Ds). This Ds' and the yaw angle $\theta y$ represent the degree to which the host vehicle departs from the lane.

The lane departure avoidance support control unit 12 calculates the target steering angle $\theta 2^*$ based on the target lateral acceleration Gys* and with reference to the target steering angle conversion map illustrated in FIG. 6 and transmits a steering command for lane departure suppression that represents the target steering angle $\theta 2^*$ to the steering ECU 30 via the arbitration control unit 13. Herein, a case where the steering command is transmitted to the steering ECU 30 via the arbitration control unit 13 will be described. Upon receiving the steering command via the arbitration control unit 13 from the lane departure avoidance support control unit 12, the steering ECU 30 drives the steering motor 32 and steers the steered wheel in accordance with the target steering angle $\theta 2^*$. Then, the auxiliary torque is generated in the steering mechanism and the host vehicle travels without departing outwards from the white line of the traveling lane.

In addition, the lane departure avoidance support control unit 12 transmits the attention-calling command to the alarm ECU 40 in a case where the steering command for lane departure suppression is transmitted. Then, the alarm ECU 40 sounds the buzzer and displays a predetermined message, mark, or the like on the display 42.

In this embodiment, the steering command for lane departure suppression is transmitted in a case where the side distance Ds falls short of the departure determination threshold Dsref. However, for example, the steering command for lane departure suppression may also be transmitted a predetermined period of time (for example, one second) before the host vehicle is predicted to depart outwards from the white line.

In addition, in this embodiment, the lane departure avoidance support control unit 12 uses the target steering angle $\theta 2^*$ as the target control amount that is transmitted to the steering ECU 30. However, since the steering angle and the steering torque have a correlation, the target steering torque may be used instead of the target steering angle as the target control amount that is transmitted to the steering ECU 30.

Hereinafter, the steering command for lane maintenance support and the steering command for lane departure suppression will be collectively referred to as a steering command for lane departure avoidance.

The arbitration control unit 13 will be described below. As described above, each of the collision avoidance support control unit 11 and the lane departure avoidance support control unit 12 of the driving support ECU 10 transmits the steering command to the steering ECU 30. Accordingly, an appropriate collision avoidance support control might be impossible in a case where the collision avoidance support control unit 11 transmits the steering command for collision avoidance to the steering ECU 30 during the transmission of the steering command for lane departure avoidance to the steering ECU 30 by the lane departure avoidance support control unit 12. In this regard, the arbitration control unit 13 is disposed between transmission paths through which the collision avoidance support control unit 11 and the lane departure avoidance support control unit 12 transmit the steering commands to the steering ECU 30 and carries out the following arbitration processing.

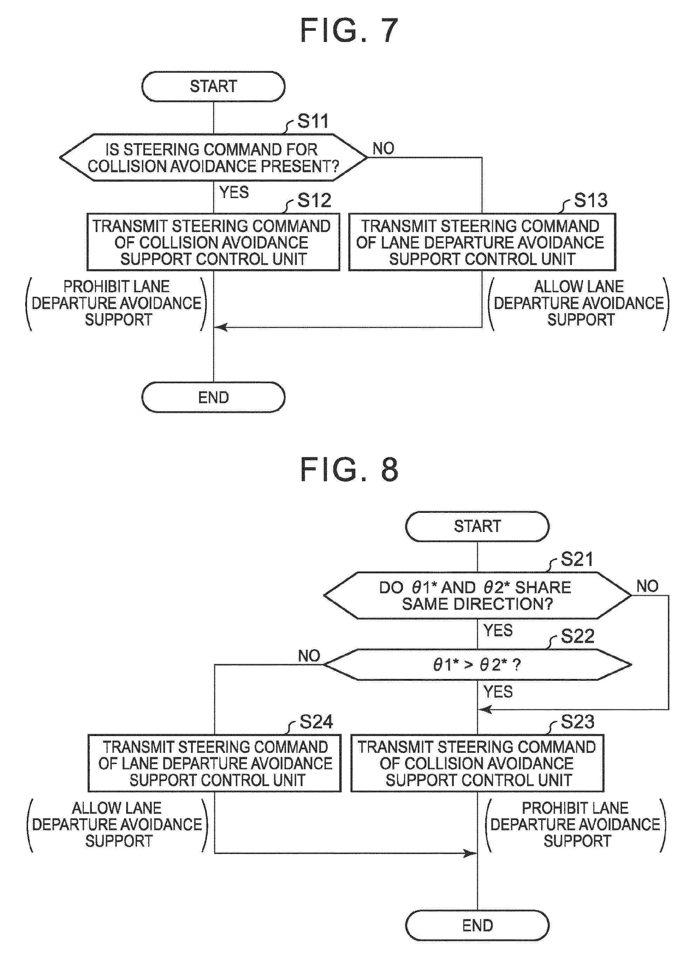

FIG. 7 shows an arbitration control routine that is carried out by the arbitration control unit 13. The arbitration control routine is repeatedly carried out at a predetermined calculation cycle while an ignition switch remains ON. As described above, each of the collision avoidance support control unit 11 and the lane departure avoidance support control unit 12 transmits the steering command (steering command for collision avoidance and steering command for lane departure avoidance) in a case where the necessity of the steering of the steered wheel arises. However, even in a case where there is no need for the steering of the steered wheel, the collision avoidance support control unit 11 and the lane departure avoidance support control unit 12 transmit steering commands to that effect (collision avoidance no-necessity command and lane departure avoidance no-necessity command). In other words, the collision avoidance support control unit 11 transmits a steering command including an identification signal for the identification of the steering command for collision avoidance or the collision avoidance no-necessity command at a predetermined calculation cycle at all times and the lane departure avoidance support control unit 12 transmits a steering command including an identification signal for the identification of the steering command for lane departure avoidance or the lane departure avoidance no-necessity command at a predetermined calculation cycle at all times. The arbitration control unit 13 receives the steering command transmitted from the collision avoidance support control unit 11 and the steering command transmitted from the lane departure avoidance support control unit 12 at a predetermined calculation cycle.

In Step S11, after the arbitration control routine is started, the arbitration control unit 13 receives the steering command transmitted from the collision avoidance support control unit 11 and the steering command transmitted from the lane departure avoidance support control unit 12 and determines whether or not the steering command transmitted by the collision avoidance support control unit 11 is the steering command for collision avoidance or the collision avoidance no-necessity command. In a case where the steering command transmitted by the collision avoidance support control unit 11 is the steering command for collision avoidance (S11: YES), that is, in a case where the collision avoidance support control unit 11 carries out collision avoidance with the automatic steering, the arbitration control unit 13 allows the processing to proceed to Step S12, blocks the steering command transmitted from the lane departure avoidance support control unit 12 to the arbitration control unit 13, and transmits the steering command for collision avoidance transmitted from the collision avoidance support control unit 11 to the arbitration control unit 13 to the steering ECU 30.

In a case where it is determined in Step S11 that the steering command transmitted by the collision avoidance support control unit 11 is not the steering command for collision avoidance, the arbitration control unit 13 blocks the steering command transmitted from the collision avoidance support control unit 11 to the arbitration control unit 13 and transmits the steering command transmitted from the lane departure avoidance support control unit 12 to the arbitration control unit 13 to the steering ECU 30 in Step S13.

After carrying out the processing of Step S12 or Step S 13, the arbitration control unit 13 temporarily terminates the arbitration control routine. The arbitration control unit 13 repeats the arbitration control routine at a predetermined calculation cycle.

According to this arbitration control routine, the collision avoidance support control by the collision avoidance support control unit 11 is certainly carried out, regardless of the steering command of the lane departure avoidance support control unit 12, in a case where the collision avoidance support control unit 11 transmits the steering command for collision avoidance. In other words, the collision avoidance support control that is carried out by the collision avoidance support control unit 11 takes precedence over the lane departure avoidance support control that is carried out by the lane departure avoidance support control unit 12. In other words, in a case where the amount of the steering of the steered wheel is controlled by the collision avoidance support system, the control of the amount of the steering of the steered wheel by the lane departure avoidance support system is prohibited.

In a case where the collision avoidance support control unit 11 transmits no steering command for collision avoidance, the lane departure avoidance support control by the lane departure avoidance support control unit 12 is allowed. In other words, in a case where the amount of the steering of the steered wheel is not controlled by the collision avoidance support system, the control of the amount of the steering of the steered wheel by the lane departure avoidance support system is allowed.

Hence, according to this embodiment, the steering control by the collision avoidance support system is given priority, and thus the driver is given an appropriate collision avoidance support. In addition, in a case where the host vehicle is unlikely to collide with the obstacle and the steering control-based collision avoidance support control is not required, the driver receives an appropriate lane departure avoidance support.

A modification example of the arbitration control routine will be described below. FIG. 8 shows the arbitration control routine according to the modification example. This arbitration control routine is carried out in a case where the steering command for collision avoidance is received from the collision avoidance support control unit 11 and the steering command for lane departure avoidance is received from the lane departure avoidance support control unit 12 by the arbitration control unit 13. In other words, this arbitration control routine is carried out in a case where the steering commands for the steering control to be performed on the steered wheel are simultaneously received from the collision avoidance support control unit 11 and the lane departure avoidance support control unit 12. In a case where the steering command for the steering control to be performed on the steered wheel is received from either one of the control units, the arbitration control unit 13 transmits the steering command of the control unit transmitting the steering command to the steering ECU 30.

In Step S21, after the arbitration control routine is started, the arbitration control unit 13 determines whether or not the target steering angle $\theta1^*$ specified by the steering command for collision avoidance and the target steering angle $\theta2^*$ specified by the steering command for lane departure avoidance share the same direction. The steering angle has the right and left specified by a symbol thereof (positive value), and thus it is determined in Step S21 whether or not the symbol of the target steering angle $\theta1^*$ and the symbol of the target steering angle $\theta2^*$ correspond to each other.

In a case where the target steering angle $\theta1^*$ and the target steering angle $\theta2^*$ do not share the same direction (S21: No), the arbitration control unit 13 blocks the steering command for lane departure avoidance and transmits the steering command for collision avoidance to the steering ECU 30 in Step S23. In a case where the target steering angle $\theta1^*$ and the target steering angle $\theta2^*$ share the same direction (S21: Yes), the arbitration control unit 13 determines in Step S22 whether or not the target steering angle $\theta1^*$ exceeds the target steering angle $\theta2^*$ ($\theta1^* > \theta2^*$). This determination is substantially the same as a determination in Step S22 of whether or not the target steering angle $\theta1^*$ is equal to or larger than the target steering angle $\theta2^*$.

In a case where the target steering angle $\theta1^*$ exceeds the target steering angle $\theta2^*$ (S22: Yes), the arbitration control unit 13 blocks the steering command for lane departure avoidance and transmits the steering command for collision avoidance to the steering ECU 30 in Step S23. In a case where the target steering angle $\theta1^*$ is equal to or smaller than the target steering angle θ2* (S22: No), the arbitration control unit 13 blocks the steering command for collision avoidance and transmits the steering command for lane departure avoidance to the steering ECU 30 in Step S24.

After carrying out the processing of Step S23 or Step S24, the arbitration control unit 13 temporarily terminates the arbitration control routine. The arbitration control unit 13 repeats the arbitration control routine at a predetermined calculation cycle.

According to this arbitration control routine, the control of the amount of the steering of the steered wheel by the lane departure avoidance support system is prohibited in a case where the direction of the target steering angle θ1* differs from the direction of the target steering angle θ2*. In addition, the control of the amount of the steering of the steered wheel by the lane departure avoidance support system is also prohibited in a case where the target steering angle θ1* exceeds the target steering angle θ2* with the direction of the target steering angle θ1* being the same as the direction of the target steering angle θ2*. In a case where the target steering angle θ1* is equal to or smaller than the target steering angle θ2*, the control of the amount of the steering of the steered wheel by the lane departure avoidance support system is allowed. Accordingly, the driver receives both the collision avoidance support and the lane departure avoidance support in a state where the collision avoidance support is given priority.

The driving support device according to this embodiment has been described above. The invention is not limited to the above-described embodiment and can be modified in various manners.

This embodiment is configured such that the steering commands that are transmitted from the collision avoidance support control unit 11 and the lane departure avoidance support control unit 12 are temporarily input to the arbitration control unit 13 and then the arbitration control unit 13 transmits either one of the steering commands to the steering ECU 30. However, the invention does not necessarily have to be limited thereto. For example, the arbitration control unit 13 can select one of the collision avoidance support system and the lane departure avoidance support system to be put into operation based on the steering commands transmitted from the collision avoidance support control unit 11 and the lane departure avoidance support control unit 12 and allow the transmission by the control unit 11 (12) correlated with the selected system. In this case, the control unit 11 (12) that is allowed to transmit the steering command transmits the steering command to the steering ECU 30.

In addition, for example, a functional unit that is similar to the arbitration control unit 13 may be disposed in the steering ECU 30. In this case, each of the collision avoidance support control unit 11 and the lane departure avoidance support control unit 12 transmits the steering command to the steering ECU 30.

The invention may also be configured such that the attention-calling command transmitted to the alarm ECU 40 is switched in compliance with the arbitration control routine carried out by the arbitration control unit 13. In other words, the invention may be configured such that the calling of the attention by the lane departure avoidance support system is prohibited in a case where the amount of the steering of the steered wheel is controlled by the collision avoidance support system.

The invention may also be configured such that the arbitration control unit 13 calculates the steered wheel control amount by multiplying each of the steering control amount of the steered wheel calculated by the collision avoidance support control unit 11 and the steering control amount of the steered wheel calculated by the lane departure avoidance support control unit 12 by a predetermined coefficient and outputs the calculated steered wheel control amount to the steering ECU 30. In this case, the steering ECU 30 controls the motor driver 31 based on the steered wheel control amount that is output from the arbitration control unit 13.

In this case, the predetermined coefficient may be determined such that the steered wheel steering control amount calculated by the collision avoidance support control unit 11 has a higher level of contribution to the steering control amount calculation result output to the steering ECU 30 in a case where both the steered wheel steering control amount calculated by the collision avoidance support control unit 11 and the steered wheel steering control amount calculated by the lane departure avoidance support control unit 12 are input to the arbitration control unit 13. For example, the coefficient may be determined such that the ratio of the contribution of the steered wheel steering control amount calculated by the collision avoidance support control unit 11 to the steering control amount calculation result output to the steering ECU 30 is 90% and the ratio of the contribution of the steered wheel steering control amount calculated by the lane departure avoidance support control unit 12 to the steering control amount calculation result output to the steering ECU 30 is 10%. When the calculation is performed in this manner, the steered wheel steering control amount calculated by the collision avoidance support control unit 11 takes precedence over the steered wheel steering control amount calculated by the lane departure avoidance support control unit 12.

The invention is not limited to the aspect in which the driving support ECU 10 realizes all the functions of the collision avoidance support control unit 11, the lane departure avoidance support control unit 12, and the arbitration control unit 13. One or more of these functions can be realized by another ECU.

**Claims**

1. A driving support device comprising:

an obstacle detection unit (14) configured to detect an obstacle present in front of a host vehicle;

a collision avoidance support control unit (11) configured to calculate a first target steering control amount for collision avoidance when the host vehicle is likely to collide with the obstacle;

a lane detection unit (14) configured to detect a lane in which the host vehicle travels;

a lane departure avoidance support control unit (12) configured to calculate a second target steering control amount for maintaining the traveling of the host vehicle along the lane based on a departure amount representing a degree to which the host vehicle departs from the lane; and

an arbitration control unit (13) configured to

    decide a steering control amount for a steered wheel based on the first target steering control amount and the second target steering control amount such that the first target steering control amount contributes higher to determine the steering control amount for the steered wheel than the second target steering control amount

    and

    control the steered wheel based on the steering control amount decided by the arbitration control unit.

2. The driving support device according to claim 1, wherein

    the arbitration control unit is configured to decide the steering control amount for the steered wheel without the second target steering control amount when the first target steering control amount is calculated.

3. The driving support device according to claim 1, wherein

    the first target steering control amount includes a first steering direction,
    the second target steering control amount includes a second steering direction, and
    the arbitration control unit is configured to decide the steering control amount for the steered wheel without the second target steering control amount when the first steering direction differs from the second steering direction.

4. The driving support device according to claim 1, wherein

    the first target steering control amount includes a first steering direction,
    the second target steering control amount includes a second steering direction, and
the arbitration control unit is configured to

    determine whether or not the first target steering control amount exceeds the second target steering control amount when the first steering direction is the same as the second steering direction, and
    decide the steering control amount for the steered wheel without the second target steering control amount when the first target steering control amount exceeds the second target steering control amount.

5. The driving support device according to claim 4, wherein

    the arbitration control unit is configured to decide the steering control amount for the steered wheel without the first target steering control amount when the first target steering control amount does not exceed the second target steering control amount.

6. A driving support method comprising:

    an obstacle detection step of detecting an obstacle present in front of a host vehicle;
    a collision avoidance support control step of calculating a first target steering control amount for collision avoidance when the host vehicle is likely to collide with the obstacle;
    a lane detection step of detecting a lane in which the host vehicle travels;
    a lane departure avoidance support control step of calculating a second target steering control amount for maintaining the traveling of the host vehicle along the lane based on a departure amount representing a degree to which the host vehicle departs from the lane; and

    an arbitration control step of

        deciding a steering control amount for a steered wheel based on the first target steering control amount and the second target steering control amount such that the first target steering control amount contributes higher to determine the steering control amount for the steered wheel than the second target steering control amount and
        controlling the steered wheel based on the steering control amount decided in the arbitration control step.

7. The driving support method according to claim 6, wherein

the arbitration control step further comprises deciding the steering control amount for the steered wheel without the second target steering control amount when the first target steering control amount is calculated.

8.  The driving support method according to claim 6, wherein

    the first target steering control amount includes a first steering direction,
    the second target steering control amount includes a second steering direction, and
    the arbitration control step further comprises deciding the steering control amount for the steered wheel without the second target steering control amount when the first steering direction differs from the second steering direction.

9.  The driving support method according to claim 6, wherein

    the first target steering control amount includes a first steering direction,
    the second target steering control amount includes a second steering direction, and
    the arbitration control step further comprises

        determining whether or not the first target steering control amount exceeds the second target steering control amount when the first steering direction is the same as the second steering direction, and
        deciding the steering control amount for the steered wheel without the second target steering control amount when the first target steering control amount exceeds the second target steering control amount.

10. The driving support method according to claim 9, wherein

    the arbitration control unit is configured to decide the steering control amount for the steered wheel without the first target steering control amount when the first target steering control amount does not exceed the second target steering control amount.

# FIG. 1

EP 3 141 461 A1

# FIG. 2

# FIG. 3

# FIG. 4

# FIG. 5

# FIG. 6

# FIG. 7

START

S11
IS STEERING COMMAND FOR COLLISION AVOIDANCE PRESENT?  — NO

YES

S12
TRANSMIT STEERING COMMAND OF COLLISION AVOIDANCE SUPPORT CONTROL UNIT

( PROHIBIT LANE DEPARTURE AVOIDANCE SUPPORT )

S13
TRANSMIT STEERING COMMAND OF LANE DEPARTURE AVOIDANCE SUPPORT CONTROL UNIT

( ALLOW LANE DEPARTURE AVOIDANCE SUPPORT )

END

# FIG. 8

START

S21
DO $\theta 1^*$ AND $\theta 2^*$ SHARE SAME DIRECTION?  — NO

YES

S22
NO — $\theta 1^* > \theta 2^*$ ?

YES

S24
TRANSMIT STEERING COMMAND OF LANE DEPARTURE AVOIDANCE SUPPORT CONTROL UNIT

( ALLOW LANE DEPARTURE AVOIDANCE SUPPORT )

S23
TRANSMIT STEERING COMMAND OF COLLISION AVOIDANCE SUPPORT CONTROL UNIT

( PROHIBIT LANE DEPARTURE AVOIDANCE SUPPORT )

END

Europäisches
Patentamt

European
Patent Office

Office européen
des brevets

## EUROPEAN SEARCH REPORT

**Application Number**

EP 16 18 1842

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 141 057 A1 (TOYOTA MOTOR CO LTD [JP]) 6 January 2010 (2010-01-06) | 1,2,6,7 | INV. B62D15/02 |
| Y | * paragraphs [0030], [0033], [0034], [0037]; claims; figures * | 3-5,8-10 | B60W30/09 |
| X | EP 2 330 009 A1 (HITACHI AUTOMOTIVE SYSTEMS LTD [JP]) 8 June 2011 (2011-06-08) * paragraphs [0032], [0058]; claims; figures * | 1,6 | |
| X | EP 2 338 758 A1 (HITACHI AUTOMOTIVE SYSTEMS LTD [JP]) 29 June 2011 (2011-06-29) * paragraphs [0020], [0031]; claims; figures * | 1,6 | |
| X | WO 2014/083649 A1 (TOYOTA MOTOR CO LTD [JP]; SATO MINAMI [JP]) 5 June 2014 (2014-06-05) | 1,6 | |
| Y | * page 43, lines 11-32 * * page 21, lines 38-41 * * page 27, lines 24-30 * * page 35, lines 28-32 * * page 36, lines 12-16; claims; figures * | 3-5,8-10 | TECHNICAL FIELDS SEARCHED (IPC) B62D B60W |

The present search report has been drawn up for all claims

| Place of search | Date of completion of the search | Examiner |
|---|---|---|
| The Hague | 13 January 2017 | Ducher, Alban |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 1842

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2017

| Patent document cited in search report | | Publication date | Patent family member(s) | | Publication date |
|---|---|---|---|---|---|
| EP 2141057 | A1 | 06-01-2010 | CN | 101641248 A | 03-02-2010 |
| | | | EP | 2141057 A1 | 06-01-2010 |
| | | | JP | 4706654 B2 | 22-06-2011 |
| | | | JP | 2008238968 A | 09-10-2008 |
| | | | US | 2010030426 A1 | 04-02-2010 |
| | | | WO | 2008117885 A1 | 02-10-2008 |
| EP 2330009 | A1 | 08-06-2011 | CN | 101959738 A | 26-01-2011 |
| | | | EP | 2330009 A1 | 08-06-2011 |
| | | | JP | 5070171 B2 | 07-11-2012 |
| | | | JP | 2010070069 A | 02-04-2010 |
| | | | US | 2011187515 A1 | 04-08-2011 |
| | | | WO | 2010032556 A1 | 25-03-2010 |
| EP 2338758 | A1 | 29-06-2011 | CN | 102209656 A | 05-10-2011 |
| | | | EP | 2338758 A1 | 29-06-2011 |
| | | | JP | 5174609 B2 | 03-04-2013 |
| | | | JP | 2010089701 A | 22-04-2010 |
| | | | US | 2011276227 A1 | 10-11-2011 |
| | | | WO | 2010041640 A1 | 15-04-2010 |
| WO 2014083649 | A1 | 05-06-2014 | CN | 104812647 A | 29-07-2015 |
| | | | DE | 112012007183 T5 | 13-08-2015 |
| | | | US | 2015291216 A1 | 15-10-2015 |
| | | | WO | 2014083649 A1 | 05-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012116403 A
- JP 2014142965 A